(19) Europäisches Patentamt / European Patent Office / Office européen des brevets

(11) **EP 2 158 246 B1**

## (12) EUROPÄISCHE PATENTSCHRIFT

(45) Veröffentlichungstag und Bekanntmachung des Hinweises auf die Patenterteilung:
**24.05.2017 Patentblatt 2017/21**

(21) Anmeldenummer: **08759045.1**

(22) Anmeldetag: **05.06.2008**

(51) Int Cl.:
**C08G 18/42** *(2006.01)*    **C08G 63/91** *(2006.01)*
**C09D 167/00** *(2006.01)*

(86) Internationale Anmeldenummer:
**PCT/EP2008/004495**

(87) Internationale Veröffentlichungsnummer:
**WO 2008/148555 (11.12.2008 Gazette 2008/50)**

(54) **KLARLACKZUSAMMENSETZUNGEN ENTHALTEND HYPERVERZWEIGTE, DENDRITISCHE HYDROXYFUNKTIONELLE POLYESTER**

CLEAR PAINT COMPOSITIONS COMPRISING HYPERBRANCHED, DENDRITIC HYDROXYFUNCTIONAL POLYESTERS

COMPOSITIONS DE VERNIS CLAIR CONTENANT DES POLYESTERS HYPERRAMIFIÉS, DENDRITIQUES HYDROXY-FONCTIONNELS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.06.2007 DE 102007026722**

(43) Veröffentlichungstag der Anmeldung:
**03.03.2010 Patentblatt 2010/09**

(73) Patentinhaber:
• **BASF Japan Ltd.**
  **Minato-ku**
  **Tokyo 106-6121 (JP)**
• **BASF Coatings GmbH**
  **48165 Münster (DE)**

(72) Erfinder:
• **TANIGUCHI, Hitoshi**
  **Yokohama 245-0066 (JP)**
• **TSUKAMOTO, Eishi**
  **Yokohama 245-0066 (JP)**
• **TAKAGI, Hiroyuki**
  **Yokohama 244-0815 (JP)**
• **POPPE, Andreas**
  **48324 Sendenhorst (DE)**
• **KLEIN, Günter**
  **48165 Münster (DE)**
• **LACKSTÄDTER, Veronika**
  **59075 Hamm (DE)**
• **HUNDER, Bianca**
  **59075 Hamm (DE)**
• **WAGNER, Petra**
  **48155 Münster (DE)**
• **FELDMANN, Björn**
  **48165 Münster (DE)**
• **HOLTSCHULTE, Sabine**
  **48153 Münster (DE)**
• **MELZER, Julia**
  **48167 Münster (DE)**
• **BRICKE, Tanja**
  **48317 Drensteinfurt (DE)**
• **HILGE, Oliver**
  **48317 Drensteinfurt (DE)**
• **SCHNIER, Benedikt**
  **48231 Warendorf (DE)**
• **HOTTENBACHER, Silke**
  **48165 Münster (DE)**
• **CLAUSEN-MEIRING, Ulrike**
  **48308 Senden (DE)**

(74) Vertreter: **BASF IP Association**
  **BASF SE**
  **G-FLP-C006**
  **67056 Ludwigshafen (DE)**

(56) Entgegenhaltungen:
WO-A-00/37542          WO-A-93/17060
WO-A-03/093343         US-A1- 2002 119 320
US-A1- 2002 136 901

**Beschreibung**

Die vorliegende Erfindung betrifft Klarlackzusammensetzungen, die mindestens einen hyperverzweigten, dendritischen hydroxyfunktionellen Polyester enthalten.

Klarlacke für die Automobillackierung verfügen vorzugsweise über gute optische Eigenschaften ("Appearance"). Weiterhin ist es jedoch auch wünschenswert, dass die Klarlacke zur besseren Umweltverträglichkeit einen geringen Lösemittelgehalt, d.h. einen hohen Festkörperanteil aufweisen. Die Erhöhung des Festkörperanteils eines Klarlacks geht jedoch üblicherweise mit einer Verschlechterung der optischen Eigenschaften aufgrund der Erhöhung der Viskosität des Klarlacks einher.

Generell hängt die Viskosität einer Polymerlösung u. a. von der Dimension des Polymers, d. h. u. a. vom hydrodynamischen Radius des gelösten Moleküls ab. Der hydrodynamische Radius des Polymers wird vor allem durch die Solvatation der Polymerketten durch das Lösemittel beeinflusst, die je nach Lösemittel unterschiedlich stark ausgeprägt ist. Um somit eine geringe Viskosität trotz eines hohen Festkörperanteils einer Polymerlösung zu erreichen, ist es prinzipiell möglich, Lösemittel einzusetzen, die nur eine geringe Solvatation der Polymerketten bewirken ("theta-Lösemittel"). Nachteilig ist hierbei jedoch die nicht universelle Einsetzbarkeit dieser Lösemittel mit allen Polymeren und weiterhin die je nach eingesetzten Harzen hohen Kosten dieser Lösemittel.

Eine andere Möglichkeit, eine niedrige Lösungsviskosität und somit einen guten Verlauf ("Levelling") bei gleichzeitig hohem Festkörperanteil zu erreichen, ist der Einsatz sehr kompakter Makromoleküle, wie z. B. der Einsatz von Sternpolymeren und hyperverzweigten, dendritischen Verbindungen. Für derartige kompakte Makromoleküle in Lösung bzw. in Zusammensetzung ist bekannt, dass sie eine geringe Viskosität bei einem vergleichsweise hohen Festkörperanteil aufweisen (z.B. Roovers, J., Macromolecules 1994, 27, 5359-5364 und Roovers, J. et al, Macromolecules 1993, 26, 4324-4331). Dabei ist der Einsatz von Sternpolymeren nur für kurze Polymerketten-Armlängen geeignet, da bei hohen Konzentrationen Sternpolymere mit langen Polymerketten-Armen repulsiven Wechselwirkungen unterliegen, die zur quasi-kristallinen Ordnungsphänomenen in Lösung führen können. Diese Ordnungsphänomene führen zu einer Erhöhung der Viskosität, die aus den oben erwähnten Gründen nachteilig ist. Somit sind hyperverzweigte, dendritische Verbindungen, die nicht derartigen Ordnungsphänomenen unterliegen, generell zu bevorzugen.

Hyperverzweigte, dendritische Verbindungen, d.h. hyperverzweigte, dendritische Makromoleküle und Dendrimere, können allgemein als dreidimensionale, hochverzweigte Moleküle mit einer baumartigen Struktur beschrieben werden. Dendrimere sind hochsymmetrisch, während ähnliche Makromoleküle, die als hyperverzweigt und/oder dendritisch bezeichnet werden, in einem bestimmten Maß asymmetrisch sein können und dennoch die hochverzweigte baumartige Struktur beibehalten. Generell können Dendrimere mit enger Molmassenverteilung hergestellt werden, d. h. sie sind in diesem Fall monodisperse oder im wesentlichen monodisperse hyperverzweigte Makromoleküle. Für monodisperse Verbindungen ist das Verhältnis vom gewichtsmittlerem zu zahlenmittlerem Molekulargewicht (Mw/Mn) = 1, wohingegen bei im wesentlichen monodispersen Verbindungen Mw/Mn $\approx$ 1 ist. Hyperverzweigte und dendritische Makromoleküle können üblicherweise ausgehend von einem Initiator oder Nukleus mit einer oder mehreren reaktiven Stellen und einer Zahl von Verzweigungsschichten ("Generationen") und gegebenenfalls einer Schicht von kettenbeendigenden Molekülen hergestellt werden (divergenter Syntheseansatz). Die fortgesetzte Replikation von Verzweigungsschichten ergibt normalerweise eine erhöhte Verzweigungsmultiplizität und gegebenenfalls oder gewünschtenfalls eine erhöhte Zahl von Endgruppen, Die Schichten werden üblicherweise Generationen und die Zweige Dendrone genannt.

Bindemittel auf Basis hyperverzweigter Polyester gehören zum Stand der Technik. So beschreibt zum Beispiel die US 6,569,956 B1 ein hyperverzweigtes Polyester-Polyol-Makromolekül mit einer Vielzahl darauf befindlicher äußerer und innerer Hydroxylgruppen, die zur Herstellung von Beschichtungszusammensetzungen mit hohem Festkörperanteil eingesetzt werden können. Die dort beschriebenen hyperverzweigten Makromoleküle weisen jedoch eine nur geringe Hydroxyfunktionalisierung auf, die für die Erzeugung harter und chemikalienbeständiger Beschichtungszusammensetzungen nachteilig sind.

Auch WO 03/093343 A1 beschreibt hochfunktionelle, hyperverzweigte, hydroxyfunktionelle Polyester, die in Beschichtungen und Lacken eingesetzt werden können. Die dort beschriebenen hochfunktionellen hyperverzweigten Polyester sind jedoch molekular und strukturell uneinheitlich, so dass sie zwar mit geringem Aufwand herstellbar sind, jedoch nur bedingt zur Erzielung einen hohen Festkörperanteils unter gleichzeitiger Vermittlung guter optischer Eigenschaften in Beschichtungszusammensetzungen eingesetzt werden können. Weiterhin sind die dort beschriebenen Polyester nicht allgemein verträglich mit unpolaren, aprotischen Lösungsmitteln.

In WO 2004/020503 A1 wird ein Verfahren zur Herstellung von hyperverzweigten, wasserlöslichen oder wasserdispergierbaren Polyestern aus Dicarbonsäuren und Polyetherpolyolen, die mindestens 3 OH-Gruppen aufweisen, beschrieben, die in Lacken und Überzügen eingesetzt werden können. Die dort beschriebenen Polyester sind jedoch ebenfalls molekular uneinheitliche Polymere, die ebenfalls nur eingeschränkt zur Erhöhung des Festkörperanteils unter gleichzeitiger Vermittlung guter optische Eigenschaften in Beschichtungszusammensetzungen eingesetzt werden können. Weiterhin sind auch diese Polyester nicht allgemein lösemittelverträglich.

EP 991 690 B1 beschreibt ein Verfahren zur Synthese polymerer Polyalkohole, die im wesentlichen aus Polyestereinheiten aufgebaut sind, das hyperverzweigte, dendritische Polyester mit ungeschützten oder geschützten Hydroxyl-Endgruppen zur Verfügung stellt. Die Produkte nach dem Verfahren können mit verschiedenen Gruppen terminiert bzw. funktionalisiert werden. Ein Verwendungszweck der nach dem beschriebenen Verfahren herzustellenden Polyester wird nicht angegeben.

WO 93/17060 A1 offenbart ein hyperverzweigtes, dendritisches Makromolekül, das im wesentlichen aus Polyestereinheiten aufgebaut ist. Das Makromolekül ist aus einem Initiator mit mindestens einer Hydroxylgruppe zusammengesetzt, zu welchem mindestens eine Verzweigungsgeneration, die mindestens einen Kettenverlängerer umfasst, mit mindestens einer Carboxylgruppe und mindestens zwei Hydroxylgruppen hinzugefügt wird. Das Makromolekül ist gegebenenfalls kettenterminiert. Die dort beschriebenen hyperverzweigten, dendritischen Makromoleküle sind über das ebenfalls beschriebene Verfahren preiswert zugänglich. Die dort beschriebenen Makromoleküle eignen sich u.a. als Bindemittel für Systeme mit Strahlenhärtung. Ihr Einsatz in thermisch härtenden Klarlackzusammensetzungen wird jedoch nicht beschrieben. Weiterhin eignen sich die in WO 93/17060 A1 aufgeführten hyperverzweigten, dendritischen Makromoleküle nicht für den Einsatz in Klarlackzusammensetzungen mit einem hohen Festkörpergehalt und guten optischen Eigenschaften.

Es ist somit Aufgabe der vorliegenden Erfindung, eine Klarlackzusammensetzung mit einem hochfunktionalisierten Bindemittel bereitzustellen, das geeignet ist zur Erzeugung von Beschichtungszusammensetzungen mit einem hohen Festkörperanteil und guter Oberflächenoptik.

Diese Aufgabe wird gelöst durch eine Klarlackzusammensetzung umfassend mindestens einen hyperverzweigten, dendritischen hydroxyfunktionellen Polyester mit einer OH-Zahl $\geq$ 180 mg KOH/g gemessen über DIN 53240.

In einer bevorzugten Ausführungsform weist der Polyester der erfindungsgemäßen Klarlackzusammensetzung einen Löslichkeitsparameter SP von $\leq$ 10,3 auf. Der Löslichkeitsparameter SP wird gemäß dem im Journal of Applied Polymer Science, Vol. 12, 1968, S. 2359 - 2370 beschriebenen Verfahren bestimmt. Dazu wird jeweils 0,5 g Polyester mit 5 g Aceton verdünnt. Dann wird n-Hexan bzw. VE-Wasser (DIW = DelonizedWater) zutitriert, bis eine Trübung entsteht.

Der Löslichkeitsparameter SP lässt sich daraus wie folgt berechnen:

$$SP = \frac{\sqrt{V_{ml}} \cdot \delta_{ml} + \sqrt{V_{mh}} \cdot \delta_{mh}}{\sqrt{V_{ml}} + \sqrt{V_{mh}}},$$

mit

$V_{ml}$ = (VAceton $\cdot$ Vn-Hexan)/($\phi$Aceton $\cdot$ Vn-Hexan + $\phi$n-Hexan $\cdot$ VAceton),
$V_{mh}$ = (VAceton $\cdot$ VDIW)/($\phi$Aceton $\cdot$ VDIW + $\phi$DIW $\cdot$ VAceton),
$\delta_{ml}$ = $\phi$Aceton $\cdot$ $\delta$Aceton + $\phi$n-Hexan $\cdot$ $\delta$n-Hexan,
$\delta_{mh}$ = $\phi$Aceton $\cdot$ $\delta$Aceton + $\phi$DIW $\cdot$ $\delta$DIW,
wobei

VAceton, Vn-Hexan, VDIW = molares Volumen des jeweiligen Lösemittels,
$\phi$Aceton, $\phi$n-Hexan, $\phi$DIW = Volumenanteil des jeweiligen Lösemittels und
$\delta$Aceton, $\delta$n-Hexan, $\delta$DIW = Löslichkeitsparameter SP des jeweiligen Lösemittels
($\delta$Aceton = 9,75 (cal/cm3)1/2; $\delta$n-Hexan = 7,24 (cal/cm3)1/2; $\delta$DIW = 23,43 (cal/cm3)1 /2).

Der Löslichkeitsparameter SP lässt sich durch die Wahl von Monomeren mit einer geeigneten Polarität bei der Herstellung der Bindemittel bzw. durch die nachträgliche Modifikation herkömmlicher Bindemittel mit Substanzen einer geeigneten Polarität einstellen. Dabei ist wesentlich, dass die eingesetzten Monomere bzw. einer Modifikation dienenden Substanzen eine hinreichend niedrige Polarität aufweisen. So sind z.B. polare Monomere wie z.B. die OH-tragenden Verbindungen 4-Hydroxybutylacrylat und Hydroxyethylmethacrylat nachteilig für den Einsatz in z.B. Acrylaten, da diese zu hohen SP-Werten führen. Nicht ganz so stark ausgeprägt ist der Einfluss von aromatischen Verbindungen, beispielsweise Styrol.

Auch für die nachträgliche Modifikation der Bindemittel ist es wesentlich, entsprechende Substanzen mit einer niedrigen Polarität auszuwählen. So können z.B. herkömmliche OH-funktionelle Bindemittel, insbesondere Polyester, durch Veresterung mit Monocarbonsäuren, insbesondere nicht-cyclischen aliphatischen Monocarbonsäuren, verestert werden, um niedrige SP-Werte zu erhalten.

Dabei ist jedoch wesentlich, dass die unpolaren Monomere bzw. Substanzen für die nachträgliche Modifikation nicht zu langkettig werden, da dies zu schlechten Ergebnissen bei den Kratzfestigkeits-, Chemikalienbeständigkeits- und Härtetests führt.

Vorzugsweise ist zur Erreichung optimaler Ergebnisse im Mittel mindestens eine Hydroxyfunktion des Polyesters mit mindestens einer Säure ausgewählt aus der Gruppe der isomeren C8-C9-Monocarbonsäuren verestert. Insbesondere kann so ein zufrieden stellender Restglanz erreicht werden. Die vorgenannt beschriebene Veresterung mit mindestens einer C8-C9-Carbonsäure wird auch synonym als "Säuremodifikation" bezeichnet.

Der Polyester in derartigen Klarlackzusammensetzungen weist bevorzugt eine Hydroxylzahl von > 180 mg KOH/g, bevorzugt 185 - 240 mg KOH/g bestimmt gemäß DIN 53240 und eine Hydroxyfunktionalität (gegeben über die Anzahl der freien und der veresterten Hydroxygruppen des hydroxyfunktionellen Polyesters) von größer als 16 auf. Derartige Klarlackzusammensetzungen verfügen über eine ausreichende Mikrohärte (d.h. > 90 N/mm2, bestimmt gemäß DIN EN ISO 14577 mit Hilfe des Fischerscope Meßgerätes der Firma Fischer mit einer maximalen Kraft von 25,6 mN) und sind kratzfest und chemikalienbeständig.

Vorzugsweise ist der Rest der isomeren C8-C9-Monocarbonsäure gesättigt. Derartige Klarlackzusammensetzungen weisen eine gute Witterungsstabilität auf.

Besonders vorteilhafte Eigenschaften im Sinne der Erfindung resultieren, wenn der Rest der C8-C9-Monocarbonsäure der Rest von Octansäure oder Isononansäure ist. Besonders bevorzugt wird als C8-C9-Monocarbonsäure Isononansäure eingesetzt.

Der Polyester weist bevorzugt eine Säurezahl ≤ 6, bevorzugt 0 - 5,5 bestimmt gemäß DIN 53402 auf. Solche Säurezahlen der Polyester in den beschriebenen Klarlackformulierungen führen zu einer besseren Verträglichkeit dieser Polyester mit anderen Lackrohstoffen und zu einem verbesserten Verlauf.

Der Polyester verfügt weiterhin bevorzugt über ein zahlenmittleres Molekulargewicht von 1500 - 4000 g/mol, bevorzugt 2000 - 3500 g/mol bestimmt über GPC mit einem Polystyrolstandard in THF mit 0,1 mol/l Essigsäure. Ein solches niedriges Molekulargewicht kombiniert mit einer entsprechend engen Molekulargewichtsverteilung des dendritischen Polyesters führt allgemein zu einer besseren Verträglichkeit.

Besonders bevorzugt werden monodisperse oder im wesentlichen monodisperse Polyester eingesetzt, die sich einfach, verlässlich und reproduzierbar herstellen lassen und deren Eigenschaften und Endstrukturen leicht und komfortabel angepasst werden können. Derartige Polyester können hergestellt werden über eine partielle Veresterung eines hydroxyfunktionellen Polyesters, der wiederum herstellbar ist über ein Verfahren zur Synthese eines dendritischen polymeren Polyalkohols (Polyesterpolyol) mit reaktiven und gegebenenfalls geschützten Hydroxylendgruppen gemäß EP 991 690 B1,

- wobei der polymere Polyalkohol n dendritische Zweige besitzt, die von einem monomeren oder polymeren Initiatormolekül mit n reaktiven Gruppen (A) entspringen, wobei jeder Zweig g Verzweigungsgenerationen umfasst, wobei jede Generation mindestens einen polymeren oder monomeren Verzweigungskettenverlängerer mit drei funktionellen Gruppen, von denen mindestens zwei reaktive Hydroxylgruppen (B) sind und eine Carboxylgruppe (C) ist, die mit der reaktiven Gruppe (A) und/oder den Hydroxylgruppen (B) reaktiv ist, umfasst, und gegebenenfalls mindestens eine Abstandhaltergeneration, die mindestens einen Abstandhalterkettenverlängerer mit zwei funktionellen Gruppen, von denen eine geschützte Hydroxylgruppe (B") und eine eine Gruppe (D) ist, die mit einer Hydroxylgruppe reaktiv ist, umfasst, wobei n und g ganze Zahlen und mindestens 1 sind,
- wobei (i) die zwei Hydroxylgruppen (B) des verwendeten monomeren oder polymeren Kettenverzweigungsverlängerers acetalgeschützte Hydroxylgruppen (B') sind, wobei der Schutz durch Acetal erhalten wird durch eine Reaktion zwischen den zwei Hydroxylgruppen (B) und einer acetalbildenden Carbonylverbindung; und
- (ii) eine erste Verzweigungsgeneration zum Initiatormolekül hinzugefügt wird durch Reaktion zwischen der reaktiven Gruppe (A) und der Carboxylgruppe (C) in einem molaren Verhältnis der reaktiven Gruppen (A) zu den Carboxylgruppen (C) von mindestens 1, wodurch ein polymerer Polyalkohol mit acetalgeschützten Hydroxylgruppen (B') und n dendritischen Zweigen, die eine Generation umfassen, erhalten wird, wobei die acetalgeschützten Hydroxylgruppen (B') gegebenenfalls mittels Acetalspaltung entschützt werden, wodurch ein polymerer Polyalkohol mit reaktiven Hydroxylgruppen (B) erhalten wird; und wobei

- (iii) weitere Verzweigungsgenerationen hinzugefügt werden in g - 1 wiederholten Schritten durch Reaktion zwischen reaktiven Hydroxylgruppen (B), die durch Entschützung mittels Acetalspaltung erhalten werden, und Carboxylgruppen (C) in einem molaren Verhältnis von Hydroxylgruppen (B) zu Carboxylgruppen (C) von mindestens 1, wodurch ein polymerer Polyalkohol mit acetalgeschützten Hydroxylgruppen (B') und n dendritischen Zweigen, die zwei oder mehr Generationen umfassen, erhalten wird, wobei die acetalgeschützten Hydroxylgruppen (B') gegebenenfalls mittels Acetalspaltung entschützt werden, wodurch ein polymerer Polyalkohol mit reaktiven Hydroxylgruppen (B) erhalten wird, und

- gegebenenfalls (iv) auf Schritt (ii) und/oder jede Wiederholung von Schritt (iii) einzeln

(a) eine teilweise Schützung, wie beispielsweise Schützung als Acetal, Ketal und/oder Ester von verfügbaren reaktiven Hydroxylgruppen (B), wodurch ein polymerer Polyalkohol mit mindestens einer reaktiven Hydroxylgruppe (B) für die Verwendung in Schritt (iii) oder in einem wiederholten Schritt (ii) erhalten wird, und/oder
(b) der Zusatz des optionalen Abstandshalterkettenverlängerers, was nach Entschützung der geschützten Hydroxylgruppe (B") einen polymeren Polyalkohol mit reaktiven Hydroxylgruppen (B) für die Verwendung in Schritt (iii) oder einem wiederholten Schritt (iii) und n dendritische Zweige ergibt, die eine oder mehrere Verzweigungsgenerationen umfassen, und mindestens eine Abstandshaltergeneration zumindest eine Teilgeneration ist; folgt.

Der Polyesteranteil der Klarlackzusammensetzung beträgt vorzugsweise 35 bis 65, bevorzugt 40 bis 60 Gew.-% bezogen auf den Festkörperanteil der Klarlackzusammensetzung und richtet sich nach der jeweiligen OH - Zahl sowie den eingesetzten Härtern. So kann eine optimale Verträglichkeit innerhalb der Klarlackzusammensetzungen erzielt werden. Dabei kann die optimale Einsatzmenge von der stöchiometrischen Einsatzmenge abweichen.

Optional umfasst die Klarlackzusammensetzung als Vernetzer mindestens ein Di- oder Polyisocyanat und / oder mindestens ein Aminoplastharz und/oder mindestens ein Tris(alkoxycarbonylamino)triazin. So können Härte und Chemikalienbeständigkeit der Klarlackfilme je nach Anforderug gesteuert werden.

Der Vernetzeranteil der Klarlackzusammensetzung beträgt vorzugsweise 30 bis 60, bevorzugt 40 bis 60 Gew.-% bezogen auf den Festkörperanteil der Klarlackzusammensetzung. So kann eine Optimierung der Formulierungszusammensetzung, insbesondere hinsichtlich Festkörpergehalt und Verträglichkeit der jeweiligen Komponenten, erfolgen.

Als Härter können in den Klarlackzusammensetzungen vor allem Isocyanat-Härter und andere Vernetzer, wie z.B. Aminoplaste-Härter und Trisalkoxycarbonylaminotriazine (TACT), allein oder in Kombination miteinander, eingesetzt werden. Bevorzugt werden aliphatische und/oder cycloaliphatische Isocyanate, ggf. in Kombination mit weiteren Vernetzungsmitteln, eingesetzt.

Bevorzugt werden in den Klarlackzusammensetzungen zur Erzielung lichtechter und wetterbeständiger, universell einsetzbarer Lacke vor allem Hexamethylendiisocyanat- (HDI) und Isophorondiisocyanat-Härter (IPDI) eingesetzt. Bevorzugt wird mindestens ein HDI-Härter verwendet, womit Beschichtungen mit guter Vernetzung und Beständigkeit erzielt werden.

Bevorzugt werden in den erfindungsgemäßen Klarlackzusammensetzungen polymere Isocyanurat-Härter wegen ihres vergleichsweise geringen Sensibilisierungspotentials und wegen ihrer guten kommerziellen Verfügbarkeit eingesetzt. Besonders bevorzugt wird als Härter ein HDI-Isocyanurat eingesetzt, da entsprechende Beschichtungszusammensetzungen, die diesen Härter enthalten, eine niedrige Viskosität aufweisen und somit gut verarbeitbar sind und einen guten Verlauf zeigen.

Vorzugsweise umfasst die Klarlackzusammensetzung als Vernetzer mindestens ein Di- oder Polyisocyanat, um eine zufrieden stellende Performance hinsichtlich der Beständigkeit, insbesondere Säure- und Bewitterungsbeständigkeit zu erreichen.

Die Härte und die Oberflächeneigenschaften der resultierenden Beschichtung können optimal gesteuert werden, wenn das Verhältnis der NCO-Gruppen des Di- oder Polyisocyanats zu den freien OH-Gruppen des hydroxyfunktionellen Polyesters $\leq$ 1,1:1 bevorzugt 1,05:1 bis 0,85:1 ist. Des weiteren können geeignete - im Stand der Technik bereits bekannte - Katalysatoren für die jeweiligen Vernetzungen eingesetzt werden.

Besonders gute Beschichtungen mit besonders hoher Kratzfestigkeit und Chemikalienbeständigkeit und besonders guten optischen Eigenschaften resultieren, wenn die Differenz der nach dem obig geschilderten Verfahren bestimmten SP-Werte des Bindemittels und des Härters maximal 1,0, bevorzugt 0,8, besonders bevorzugt 0,5 beträgt.

Gegenstand der vorliegenden Offenbarung ist auch ein hyperverzweigter, dendritischer hydroxyfunktioneller Polyester mit einer OH-Zahl $\geq$ 180 mg KOH/g gemessen über DIN 53240. Dieser Polyester kann als hochfunktionalisiertes Bindemittel in Klarlackzusammensetzungen mit hohem Festkörperanteil unter Erzielung einer guten Oberflächenoptik eingesetzt werden.

Vorzugsweise weist der erfindungsgemäß eingesetzte Polyester einen Löslichkeitsparameter SP von $\leq$ 10,3 auf, wobei der Löslichkeitsparameter über das oben beschriebene Verfahren bestimmt wird.

Besonders gute Ergebnisse resultieren, wenn im Mittel mindestens eine Hydroxyfunktion des hyperverzweigten, dendritischen hydroxyfunktionellen Polyesters mit mindestens einer Säure ausgewählt aus der Gruppe der isomeren C8-C9-Monocarbonsäure verestert ist. So resultiert z.B. ein guter Restglanz bei entsprechenden Klarlackzusammensetzungen.

Bevorzugt weist der Polyester eine Hydroxylzahl von > 180 mg KOH/g, bevorzugt 185 - 240 mg KOH/g bestimmt nach DIN 53240 und eine Hydroxyfunktionalität (gegeben über die Anzahl der freien und der säuremodifizierten Hydroxygruppen des hydroxyfunktionellen Polyesters) von größer als 16 auf. Klarlackfilme, die diese Polyester enthalten, verfügen über eine gute Mikrohärte, Kratzfestigkeit und Chemikalienbeständigkeit.

Vorzugsweise ist der Rest der C8-C9-Monocarbonsäure gesättigt. Derartige Polyester in Klarlackzusammensetzungen führen zu Filmen mit einer guten Witterungsstabilität.

Besonders vorteilhaft ist der Rest der C8-C9-Monocarbonsäure der Rest von Octansäure oder Isononansäure.

Besonders bevorzugt ist der Rest der C8-C9-Monocarbonsäure ein Isononansäure-Rest.

Der Polyester weist bevorzugt eine Säurezahl ≤ 6, bevorzugt 0 - 5,5 bestimmt nach DIN 53402 auf. Polyester mit solchen Säurezahlen sind gut verträglich mit anderen Rohstoffen in Beschichtungszusammensetzungen und führen zu einem guten Verlauf.

Der Polyester verfügt weiterhin bevorzugt über ein zahlenmittleres Molekulargewicht von 1500 - 4000 g/mol, bevorzugt 2000 - 3500 g/mol bestimmt über GPC mit einem Polystyrolstandard in THF mit 0,1 mol/l Essigsäure. Derartige Molekulargewichte führen in Beschichtungszusammensetzungen zu einer verbesserten Verträglichkeit im Vergleich zu hochmolekularen Substanzen.

Gegenstand der vorliegenden Offenbarung ist weiterhin ein Verfahren zur Herstellung eines erfindungsgemäß eingesetzten hyperverzweigten, dendritischen Polyesters, bei dem zunächst

- ein dendritischer polymerer Polyalkohol (Polyesterpolyol) mit reaktiven und gegebenenfalls geschützten Hydroxylendgruppen, der n dendritische Zweige besitzt, die von einem monomeren oder polymeren Initiatormolekül mit n reaktiven Gruppen (A) entspringen, wobei jeder Zweig g Verzweigungsgenerationen umfasst, wobei jede Generation mindestens einen polymeren oder monomeren Verzweigungskettenverlängerer mit drei funktionellen Gruppen, von denen mindestens zwei reaktive Hydroxylgruppen (B) sind und eine eine Carboxylgruppe (C) ist, die mit der reaktiven Gruppe (A) und/oder den Hydroxylgruppen (B) reaktiv ist, umfasst, und gegebenenfalls mindestens eine Abstandhaltergeneration, die mindestens einen Abstandhalterkettenverlängerer mit zwei funktionellen Gruppen, von denen eine eine geschützte Hydroxylgruppe (B") und eine eine Gruppe (D) ist, die mit einer Hydroxylgruppe reaktiv ist, umfasst, wobei n und g ganze Zahlen und mindestens 1 sind, hergestellt wird,
- wobei (i) die zwei Hydroxylgruppen (B) des verwendeten monomeren oder polymeren Kettenverzweigungsverlängerers acetalgeschützte Hydroxylgruppen (B') sind, wobei der Schutz durch Acetal erhalten wird durch eine Reaktion zwischen den zwei Hydroxylgruppen (B) und einer acetalbildenden Carbonylverbindung;
- und (ii) eine erste Verzweigungsgeneration zum Initiatormolekül hinzugefügt wird durch Reaktion zwischen der reaktiven Gruppe (A) und der Carboxylgruppe (C) in einem molaren Verhältnis der reaktiven Gruppen (A) zu den Carboxylgruppen (C) von mindestens 1, wodurch ein polymerer Polyalkohol mit acetalgeschützten Hydroxylgruppen (B') und n dendritischen Zweigen, die eine Generation umfassen, erhalten wird, wobei die acetalgeschützten Hydroxylgruppen (B') gegebenenfalls mittels Acetalspaltung entschützt werden, wodurch ein polymerer Polyalkohol mit reaktiven Hydroxylgruppen (B) erhalten wird; und wobei
- (iii) weitere Verzweigungsgenerationen hinzugefügt werden in g - 1 wiederholten Schritten durch Reaktion zwischen reaktiven Hydroxylgruppen (B), die durch Entschützung mittels Acetalspaltung erhalten werden, und Carboxylgruppen (C) in einem molaren Verhältnis von Hydroxylgruppen (B) zu Carboxylgruppen (C) von mindestens 1, wodurch ein polymer Polyalkohol mit acetalgeschützten Hydroxylgruppen (B') und n dendritischen Zweigen, die zwei oder mehr Generationen umfassen, erhalten wird, wobei die acetalgeschützten Hydroxylgruppen (B') gegebenenfalls mittels Acetalspaltung entschützt werden, wodurch ein polymerer Polyalkohol mit reaktiven Hydroxylgruppen (B) erhalten wird, und
- gegebenenfalls (iv) auf Schritt (ii) und/oder jede Wiederholung von Schritt (iii) einzeln

    (a) eine teilweise Schützung, wie beispielsweise Schützung als Acetal, Ketal und/oder Ester von verfügbaren reaktiven Hydroxylgruppen (B), wodurch ein polymerer Polyalkohol mit mindestens einer reaktiven Hydroxylgruppe (B) für die Verwendung in Schritt (iii) oder in einem wiederholten Schritt (ii) erhalten wird, und/oder
    (b) der Zusatz des optionalen Abstandshalterkettenverlängerers, was nach Entschützung der geschützten Hydroxylgruppe (B") einen polymeren Polyalkohol mit reaktiven Hydroxylgruppen (B) für die Verwendung in Schritt (iii) oder einem wiederholten Schritt (iii) und n dendritische Zweige ergibt, die eine oder mehrere Verzweigungsgenerationen umfassen, und mindestens eine Abstandshaltergeneration zumindest eine Teilgeneration ist;

    folgt,
- gefolgt von einer partiellen Veresterung des hydroxyfunktionellen Polyesters mit einer isomeren C8-C9-Monocarbonsäure. Die nach diesem einfachem, verlässlichen und reproduzierbaren Verfahren hergestellten Verbindungen können monodispers oder im wesentlichen monodispers sein. Weiterhin lassen sich die Eigenschaften und Endstrukturen der Verbindungen leicht und komfortabel anpassen.

Gegenstand der Offenbarung ist weiterhin ein Verfahren zur Herstellung des erfindungsgemäß eingesetzten Polyesters, bei dem ein hyperverzweigter, dendritischer, hydroxyfunktioneller Polyester partiell mit mindestens einer isomeren C8-C9-Monocarbonsäure versetzt wird.

Gegenstand der Offenbarung ist weiterhin die Verwendung der erfindungsgemäßen Klarlackzusammensetzungen zur Herstellung von Klarlackbeschichtungszusammensetzungen für die Automobilserienlackierung, die Lackierung von Aufbauteilen oder Nutzfahrzeugen oder die Reparaturlackierung. Vorzugsweise sind die Klarlackzusammensetzungen für den Einsatz bei dem "Naß-in-naß"-Verfahren geeignet. Bei diesem Verfahren wird auf ein ggf. vorbehandeltes und ggf. mit einer KTL-Grundierung und einem Füller vorbeschichtetes Substrat in zwei Schritten zunächst der Basislack und dann der Klarlack aufgebracht. "Naß-in-naß" bedeutet dabei, dass beide Lacke in kurzem Abstand ohne Einbrennen des Basislacks appliziert werden, um dann gemeinsam eingebrannt und vernetzt zu werden. Besonders bevorzugt wird der erfindungsgemäße Klarlack für den Einsatz bei einem Lackierverfahren, bei dem ein mit einer eingebrannten KTL-Lackierung beschichtetes Substrat mit einem modifizierten Basislack beschichtet wird, nach einem zwischenzeitlichen flash-off ein Basislack aufgebracht wird, nach einem weiteren flash-off ein Klarlack aufgebracht wird und nach einem ggf. erfolgenden flash-off ein gemeinsames Einbrennen der Lackkomponenten erfolgt. Bei diesem Verfahren wird kein üblicher Füller eingesetzt

Gegenstand der Offenbarung sind weiterhin Substrate, die mit einer erfindungsgemäßen Klarlackzusammensetzung beschichtet sind. Bei derartigen Substraten handelt es sich um ggf. vorbehandelte und ggf. mit einer KTL-Grundierung und einem Füller vorbeschichtete Substrate aus Stahl, verzinktem Stahl und Aluminium, wie sie bei der Fertigung von Automobilkarosserien zum Einsatz kommen.

Beispiele:

Vergleichsbeispiel 1 - Herstellung des Polyesters SP1

In einem mit einem Rührer, Rückflußkühler und Wasserabscheider versehenen Reaktor werden 1696 Gewichtsteile Hexansäure gegeben und mit 40 Gewichtsteilen Xylol versetzt. Die Mischung wird vorsichtig unter Rühren auf 80 °C erhitzt. Dann werden 4439 Gewichtsteile eines dendritischen hydroxyfunktionellen Polyesters (Boltorn H 30, erhältlich von Perstorp) langsam hinzu gegeben, um Klumpenbildung zu vermeiden. Nach Zugabe wird das Reaktionsgemisch auf 200 °C aufgeheizt. Zur Überwachung des Reaktionsverlaufes wird das Volumen des Kondensats mitprotokolliert und von Zeit zu Zeit eine Probe zur Bestimmung der Hydroxylzahl entnommen. Nachdem die zuvor berechnete, einer vollständigen Umsetzung entsprechende Menge an Kondensat erreicht ist, wird der Xylolanteil destillativ entfernt. Das Reaktionsgemisch wird bei 200 °C gerührt, bis eine Säurezahl von weniger als 5 mg KOH/g (bestimmt gemäß DIN 53402) erreicht ist. Das Gemisch wird auf 145 °C abgekühlt und in 994 Gewichtsteilen Pentylacetat gelöst.

Das resultierende Polyesterharz hat einen Festkörperanteil von 84,1 Gew.-% und eine Viskosität von 15,1 dPas (bestimmt gemäß DIN EN ISO 2884-1). Die resultierende Hydroxylzahl beträgt 220 mg KOH/g (bestimmt gemäß DIN 53240).

Vergleichsbeispiel 2 - Herstellung des Polyesters SP2

Beispiel 1 wird für die folgenden Edukte in den angegebenen Mengen wiederholt:

| Boltorn H 30 | 4439 | Gewichtsteile |
|---|---|---|
| Heptansäure | 1628 | Gewichtsteile |
| Xylol | 40 | Gewichtsteile |
| Pentylacetat | 994 | Gewichtsteile |

Das resultierende Polyesterharz hat einen Festkörperanteil von 84,1 Gew.-% und eine Viskosität von 11,5 dPas (bestimmt gemäß DIN EN ISO 2884-1). Die resultierende Hydroxylzahl beträgt 220 mg KOH/g (bestimmt gemäß DIN 53240).

Erfindungsgemäßes Beispiel 3 - Herstellung des Polyesters SP3

Beispiel 1 wird für die folgenden Edukte in den angegebenen Mengen wiederholt:

| Boltorn H 30 | 4439 | Gewichtsteile |
|---|---|---|
| Octansäure | 1574 | Gewichtsteile |
| Xylol | 40 | Gewichtsteile |
| Pentylacetat | 994 | Gewichtsteile |

Das resultierende Polyesterharz hat einen Festkörperanteil von 85,8 Gew.-% und eine Viskosität von 11,5 dPas (bestimmt gemäß DIN EN ISO 2884-1). Die resultierende Hydroxylzahl beträgt 220 mg KOH/g (bestimmt gemäß DIN 53240).

Erfindungsgemäßes Beispiel 4 - Herstellung des Polyesters SP4

Beispiel 1 wird für die folgenden Edukte in den angegebenen Mengen wiederholt:

| Boltorn H 30 | 4439 | Gewichtsteile |
|---|---|---|
| Isononansäure | 1523 | Gewichtsteile |
| Xylol | 40 | Gewichtsteile |
| Pentylacetat | 994 | Gewichtsteile |

Das resultierende Polyesterharz hat einen Festkörperanteil von 86,3 Gew.-% und eine Viskosität von 15,1 dPas (bestimmt gemäß DIN EN ISO 2884-1). Die resultierende Hydroxylzahl beträgt 220 mg KOH/g (bestimmt gemäß DIN 53240).

Vergleichsbeispiel 5 - Herstellung des Polyesters SP5

Beispiel 1 wird für die folgenden Edukte in den angegebenen Mengen wiederholt:

| Boltorn H 30 | 4439 | Gewichtsteile |
|---|---|---|
| Decansäure | 1480 | Gewichtsteile |
| Xylol | 40 | Gewichtsteile |
| Pentylacetat | 994 | Gewichtsteile |

Das resultierende Polyesterharz hat einen Festkörperanteil von 85,5 Gew.-% und eine Viskosität von 11,5 dPas (bestimmt gemäß DIN EN ISO 2884-1). Die resultierende Hydroxylzahl beträgt 220 mg KOH/g (bestimmt gemäß DIN 53240).

Erfindungsgemäßes Beispiel 6 - Herstellung des Polyesters SP6

Das in Beispiel 1 geschilderte Herstellverfahren wird unter Verwendung von Boltorn H 20 (erhältlich von Perstorp), Isononansäure, Xylol und Pentylacetat zur Erzeugung eines Polyesterharzes mit einem Festkörperanteil von 85,0 Gew.-%, einer Viskosität von 5,65 dPas (bestimmt gemäß DIN EN ISO 2884-1) und einer Hydroxylzahl von 220 mg KOH/g (bestimmt gemäß DIN 53240) eingesetzt.

Erfindungsgemäßes Beispiel 7 - Herstellung des Polyesters SP7

Das in Beispiel 1 geschilderte Herstellverfahren wird unter Verwendung von Boltorn H 30, Isononansäure, Xylol und Pentylacetat zur Erzeugung eines Polyesterharzes mit einem Festkörperanteil von 85,0 Gew.-%, einer Viskosität von 15,5 dPas (bestimmt gemäß DIN EN ISO 2884-1) und einer Hydroxylzahl von 240 mg KOH/g (bestimmt gemäß DIN 53240) eingesetzt.

Erfindungsgemäßes Beispiel 8 - Herstellung des Polyesters SP8

Das in Beispiel 1 geschilderte Herstellverfahren wird unter Verwendung von Boltorn H 30, Isononansäure, Xylol und Pentylacetat zur Erzeugung eines Polyesterharzes mit einem Festkörperanteil von 82,0 Gew.-%, einer Viskosität von 5,1 dPas (bestimmt gemäß DIN EN ISO 2884-1) und einer Hydroxylzahl von 180 mg KOH/g (bestimmt gemäß DIN 53240) eingesetzt.

Tabelle 1 - Überblick über die Polyesterharze gemäß Beispiel 1 bis 8

| Harz | Polyester-Typ | Modifikator | SP | Hydroxylzahl |
|---|---|---|---|---|
| SP1 | Boltorn H 301 | Hexansäure | 10,29 | 220 |
| SP2 | Boltorn H 30 | Heptansäure | 10,01 | 220 |
| SP3 | Boltorn H 30 | Octansäure | 9,88 | 220 |
| SP4 | Boltorn H 30 | Isononansäure | 9,88 | 220 |

(fortgesetzt)

| Harz | Polyester-Typ | Modifikator | SP | Hydroxylzahl |
|------|---------------|-------------|------|--------------|
| SP5 | Boltorn H 30 | Decansäure | 9,63 | 220 |
| SP6 | Boltorn H 202 | Isononansäure | 9,90 | 220 |
| SP7 | Boltorn H 30 | Isononansäure | 10,16 | 240 |
| SP8 | Boltorn H 30 | Isononansäure | 9,5 | 180 |
| [1] Boltorn H 30: OH-Funktionalität 32 [2] Boltorn H 20: OH-Funktionalität 16 | | | | |

Herstellung eines erfindungsgemäßen SCA-Harzes

In einem 10-Liter-Juvo-Labor-Reaktionskessel mit Heizmantel, ausgestattet mit Thermometer, Rührer und Kühlaufsatz werden 1512,5 g Solventnaphtha vorgelegt. Unter Rühren und Überschleiern mit 200 cm3/ min Stickstoff wird auf 160°C bei Überdruck (max. 3,5 bar) erhitzt und mittels Dosierpumpe eine Mischung aus 80,5 g Di-tert-butyl-peroxid und 201,0 g Solventnaphtha gleichmäßig innerhalb von 4,75 h zugetropft. 0,25 h nach Zulaufbeginn wird über eine Dosierpumpe eine Mischung aus 1283,5 g Styrol, 1115,0 g n-Butylacrylat, 693,5 g Hydroxyethylacrylat, 70,5 g Methacrylsäure und 43,5 g Methacrylester-13 gleichmäßig innerhalb von 4h zudosiert. Nach Ende des Zulaufes wird die Temperatur noch 2h gehalten und dann auf 60°C abgekühlt und über ein 5μm - GAF-Beutel filtriert. Das resultierende Harz hat eine Säurezahl von 15 mg KOH/g (DIN 53402), Feststoffgehalt 65% ±1 (60min. 130°C) und eine Viskosität von 5,0 dPa*s gemessen nach DIN ISO 2884-1 (55%-ig in Solventnaphtha).

Harnstofffällung:

In einem 200 l Gefäß werden 84,7 g der Harzlösung vorgelegt und mit 5,88 g Butylacetat verdünnt. Anschließend wird 2,24 g Benzylamin zugegeben und die Mischung 30 Minuten gerührt. Nach dieser Zeit wurde unter hoher Scherung eine Mischung aus 1,76 g Hexamethylendiisocyanat und 3,42 g Butylacetat so zugegeben, daß die Reaktionstemperatur von 40 °C nicht überschritten wird. Die erhaltene Mischung hat eine Viskosität von >800 mPas (10 s-1) (Z3) (DIN ISO 2884-1) und einen Feststoffgehalt von 58,6-59,6 % (60min. 130°C).

Herstellung einer erfindungsgemäßen Thixotropierungspaste

In einem 10-Liter-Juvo-Labor-Reaktionskessel mit Heizmantel, ausgestattet mit, Thermometer, Rührer und Kühlaufsatz werden 3166,1 g Shellsol A vorgelegt. Unter Rühren und Überschleiern mit 200 cm3/ min Stickstoff wird auf 156°C bei erhitzt und mittels Tropftrichter eine Mischung aus 155,9 g Di-tert-butyl-peroxid und 297,4g Shellsol gleichmäßig innerhalb von 4,75 h zugetropft. 0,25 h nach Zulaufbeginn wird über einen Tropftrichter eine Mischung aus 829,5 g Styrol, 2041,8 g n-Butylacrylat, 893,3 g n-Butylmethacrylat, 1276,1 g Hydroxyethylacrylat, 63,8 g Acrylsäure und 1276,1 g 4-Hydroxybutylacrylat gleichmäßig innerhalb von 4 h zudosiert. Nach Ende des Zulaufes wird die Temperatur noch 2 h gehalten und dann auf 80 °C abgekühlt und über ein 5μm - GAF-Beutel filtriert. Das resultierende Harz hat eine Säurezahl von 10 mg KOH/g (DIN 53402), Feststoffgehalt 65% ±1 (60min. 130°C) und eine Viskosität von 20,0 dPa*s gemessen nach DIN ISO 2884-1.

In einem 200 l Gefäß werden 43,8 g der Harzlösung vorgelegt und mit 24,7 g Xylol sowie 23,4 g Butanol verdünnt. Nach 10 min. wurde unter Scherung 11,1 g Aerosil R812 zugegeben und die Mischung für weitere 30 Minuten geschert. Die erhaltene Mischung hat eine Viskosität von 130 mPas (10 s-1) (Z3) (DIN ISO 2884-1).

Klarlackzusammensetzungen

Mit den in Tabelle 1 genannten Polyesterharzen wurde gemäß den nachfolgenden Einwaagen die jeweils erste Komponente eines 2-Komponenten-Klarlacks hergestellt:

| | 1 | 2 | 3 | 4 | 5 | 6 | 7 |
|-----|-------|-------|---|---|---|---|---|
| SP1 | 91,94 | | | | | | |
| SP2 | | 92,23 | | | | | |

(fortgesetzt)

|  | 1 | 2 | 3 | 4 | 5 | 6 | 7 |
|---|---|---|---|---|---|---|---|
| SP4 |  |  | 92,26 |  |  |  |  |
| SP5 |  |  |  | 96,55 |  |  |  |
| SP6 |  |  |  |  | 92,91 |  |  |
| SP7 |  |  |  |  |  | 90,88 |  |
| SP8 |  |  |  |  |  |  | 95,79 |
| Butanol | 2,39 | 2,39 | 2,39 | 2,39 | 2,39 | 2,39 | 2,39 |
| GB Ester3 | 7,38 | 7,38 | 7,38 | 7,38 | 7,38 | 7,38 | 7,38 |
| MPA4 | 12,41 | 12,41 | 12,41 | 12,41 | 12,41 | 12,41 | 12,41 |
| Pentylacetat | 14,90 | 14,90 | 14,90 | 14,90 | 14,90 | 14,90 | 14,90 |
| BDGA5 | 7,67 | 7,67 | 7,67 | 7,67 | 7,67 | 7,67 | 7,67 |
| Ethoxypropylacetat | 3,76 | 3,76 | 3,76 | 3,76 | 3,76 | 3,76 | 3,76 |
| Xylol | 2,10 | 2,10 | 2,10 | 2,10 | 2,10 | 2,10 | 2,10 |
| Byk 3316 | 0,14 | 0,14 | 0,14 | 0,14 | 0,14 | 0,14 | 0,14 |
| Byk ES-807 | 0,29 | 0,29 | 0,29 | 0,29 | 0,29 | 0,29 | 0,29 |
| Tinuvin 2928 | 1,45 | 1,45 | 1,45 | 1,45 | 1,45 | 1,45 | 1,45 |
| Tinuvin 384-29 | 1,74 | 1,74 | 1,74 | 1,74 | 1,74 | 1,74 | 1,74 |

Zur Herstellung von Zweikomponenten-Klarlack-Beschichtungen werden die gemäß obigen Angaben hergestellten jeweils ersten Komponenten mit den nachfolgend [3] Glycolic acid - n - butylester (G - B - Ester), erhältlich unter dem Handelsnamen "Polysolvan O" von der Fa. Celanese Chemicals Europe GmbH, 61476 Kronberg
[4] MPA = Methoxypropylacetat
[5] BDGA = Butyldiglykolacetat
[6] Polyethermodifiziertes Polydimethylsiloxan, Byk-Chemie GmbH, Wesel
[7] Additiv, Byk-Chemie GmbH, Wesel
[8] Stabilisator auf Basis sterisch gehinderter Amine, Ciba Specialty Chemicals, Basel, Schweiz
[9] UV-Absorber, Ciba Specialty Chemicals, Basel, Schweiz genannten Einwaagen der zweiten Komponente (Polyisocyanat-Härter Basonat HI 190 der BASF Aktiengesellschaft) homogenisiert und direkt danach appliziert.

2. Komponente:

| Basonat HI 19010 | 65,02 | 72,95 | 72,95 | 72,95 | 72,95 | 72,95 | 76,39 |
|---|---|---|---|---|---|---|---|

Dazu werden Prüfbleche verwendet, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren. Die Basislackschicht und die Klarlackschicht wurden gemeinsam während 22 Minuten bei 140°C gehärtet. Die resultierende Basislackierung wies eine Schichtdicke von 7,5 $\mu$m auf, die resultierende Klarlackierung eine Schichtdicke von ca. 35 $\mu$m.

Die resultierenden Klarlack-Beschichtungen weisen die folgenden Eigenschaften auf:

|  | 1 | 2 | 3 | 4 | 5 | 6 | 7 |
|---|---|---|---|---|---|---|---|
| Festkörperanteil der Mischung [Gew.-%] | 65,4 | 65,1 | 65,4 | 65,9 | 65,8 | 65,9 | 66,2 |
| Mikrohärte [N/mm2]11 | < 40 (weich) | < 40 (weich) | 97 | 49 | 55 | 123 | 47 |
| Oberflächenoptik (Appearance)12 | 0 | 0 | 2 | 1 | 2 | 2 | 2 |

(fortgesetzt)

| | 1 | 2 | 3 | 4 | 5 | 6 | 7 |
|---|---|---|---|---|---|---|---|
| AMTEC-Rest-glanz nach Reinigung [%] | ./. | ./. | 87 | ./. | 92 | 79 | 92 |

[10] 90%-ige Lösung in einem 1:1 Gemisch aus n-Butylacetat und Solvesso® 100
[11] bestimmt gemäß DIN EN ISO 14577 mit Hilfe des Fischerscope Meßgerätes der Firma Fischer mit einer maximalen Kraft von 25,6 mN
[12] bestimmt über eine visuelle Beurteilung der ausgehärteten Filme: 0 = uneben Oberfläche, schlechte Oberflächenoptik; 1 = Extrem matte Oberfläche, schlechte Oberflächenoptik; 2 = glatte Oberfläche, sehr gute Oberflächenoptik

Die Versuchsergebnisse zeigen, dass eine minimale bzw. maximale Kohlenwasserstoffrest-Länge des Monocarbonsäuremodifikators erforderlich ist, um eine Kompatibilität mit dem Härter und dem Substrat zu gewährleisten. Zu kurze Ketten führen zu einer Inkompatibilität (Beispiele 1 - 2), genauso wie zu lange Ketten (Beispiel 4).

Um zu gewährleisten, dass die resultierenden Filme weiterhin eine zufrieden stellende Härte aufweisen, ist es sinnvoll, Harze mit einer ausreichend hohen Hydroxylzahl zu wählen (Beispiele 6 und 7).

Die Funktionalität des eingesetzten Polyesters (als Summe der freien und veresterten Hydroxygruppen des eingesetzten Polyesters) hat auch einen wesentlichen Einfluss auf die Eigenschaften des resultierenden Films: Polyester mit niedriger Hydroxylfunktionalität (Beispiel 5, Boltorn 20, Funktionalität = 16) führen zu weichen Filmen, während hohe Funktionalitäten (Beispiel 3, Funktionalität = 32) zu wesentlich härteren Filmen führen.

Mit Hilfe der hyperverzweigten, dendritischen Polyester können wesentlich höhere Festkörperanteile in 2K-Klarlackzusammensetzungen erreicht werden als in herkömmlichen Zusammensetzungen.

Vergleichsbeispiel 8 - Zweikomponenten-Klarlackzusammensetzung gemäß dem Stand der Technik

| Macrynal SM 510 N[13] | 52,3 |
|---|---|
| DBTL (5 % in Xylol)[14] | 0,1 |
| Tinuvin 292[15] | 0,24 |
| Tinuvin 900 (18 % in Xylol)[16] | 1,33 |
| BA[17] | 12,8 |
| Xylol | 11,6 |
| Dibasic Ester[18] | 5,0 |
| Fluorad FC 430[19] | 0,2 |
| Gesamt: | 83,6 |
| Vernetzer: Desmodur N 3300[20] | 16,4 |

[13] Hydroxyfunktionelles Acrylatcopolymer, erhältlich von Solutia Germany GmbH, 55252 Mainz - Kastel
[14] DBTL = Dibutylzinndilaurat
[15] Stabilisator auf Basis sterisch gehinderter Amine, Ciba Specialty Chemicals, Basel, Schweiz
[16] UV-Absorber, Ciba Specialty Chemicals, Basel, Schweiz
[17] Butylacetat
[18] Gemisch verschiedener Ester, erhältlich unter dem Handelsnamen "DBE" von der Fa. Lemro, 41515 Grevenbroich
[19] Fluoroaliphatischer Ester in Toluol angelöst, erhältlich von der Fa. 3 M Deutschland GmbH, 41453 Neuss.
[20] Aliphatisches Polyisocyanat, Bayer Material Sciences, Leverkusen

Die erfindungsgemäßen Klarlackzusammensetzungen haben im Vergleich zu den Klarlackzusammensetzungen (Festkörperanteil 50 Gew.-%) nach dem Stand der Technik einen wesentlich höheren Festkörperanteil.

Erfindungsgemäßes Beispiel 9 - Zweikomponenten-Klarlackzusammensetzung

| | |
|---|---|
| Polyesterharz SP4 | 94,48 |
| Butanol | 2,44 |
| GB Ester21 | 7,55 |
| MPA22 | 12,71 |
| Pentylacetat | 15,26 |
| BDGA23 | 7,85 |
| Ethoxypropylacetat | 3,85 |
| Xylol | 2,15 |
| Byk 30024 | 0,07 |
| Byk ES-8025 | 0,3 |
| Tinuvin 152 (50 % in BA)26 | 1,48 |
| Tinuvin 384-227 | 1,78 |
| | |
| Quervernetzer: Basonat HI 19028 | 74,71 |

Die Zweikomponenten-Klarlackzusammensetzung wird auf Prüfbleche appliziert. Dazu werden Prüfbleche verwendet, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet sind. Die Basislackschicht und die Klarlackschicht werden gemeinsam während 22 Minuten bei 140°C gehärtet. Die resultierende Basislackierung weist eine Schichtdicke von 7,5 $\mu$m auf, die resultierende Klarlackierung eine Schichtdicke von ca. 35 $\mu$m. [21] Glycolic acid - n - butylester (G - B - Ester), erhältlich unter dem Handelsnamen "Polysolvan O" von der Fa. Celanese Chemicals Europe GmbH, 61476 Kronberg

[22] Methoxypropylacetat

[23] Butylglykoldiacetat

[24] Lösung eines polyethermodifizierten Polydimethylsiloxans, Byk-Chemie GmbH, Wesel

[25] Additiv, Byk-Chemie GmbH, Wesel

[26] Stabilisator auf Basis sterisch gehinderter Amine, Ciba specialty chemicals, Basel, Schweiz

[27] UV-Absorber, Ciba Specialty Chemicals, Basel, Schweiz

[28] Polyisocyanat-Härter der BASF Aktiengesellschaft

Die resultierenden Klarlackfilme weisen eine sehr gute Kompatibilität - trotz des hohen Festkörperanteils - auf und zeichneten sich durch eine sehr gute Oberflächenoptik aus. Der AMTEC-Restglanz der Beschichtungen beträgt 83 % und die Mikrohärte 111 N/mm2.

Erfindungsgemäßes Beispiel 10 - Zweikomponenten-Klarlackzusammensetzung

| | |
|---|---|
| Polyesterharz SP3 | 37,4 |
| SCA - Harz | 5,5 |
| Setalux 91756 VS - 6029 | 8,4 |
| Thixotropierungspaste | 1,3 |
| Cycat 404530 | 0,3 |
| BGA31 | 6,1 |
| Setamine US - 13832 | 5,8 |
| Disperbyk 16133 | 0,7 |

(fortgesetzt)

| | |
|---|---|
| Byk 325 | 0,1 |
| Butylacetat | 4,5 |
| Tinuvin 524834 | 2,1 |
| Solvesso 20035 | 1,0 |
| Byk 390 36 | 0,1 |
| Solvent Naphta | 7,4 |
| Butanol | 3,5 |
| Xylol | 5,0 |
| | |
| Quervernetzer: Basonat HI 190 | 33,0 |

Die Zweikomponenten-Klarlackzusammensetzung wird auf Prüfbleche appliziert. Dazu werden Prüfbleche verwendet, die jeweils mit einer üblichen und bekannten, kathodisch abgeschiedenen, thermisch gehärteten Elektrotauchlackierung, einer üblichen und bekannten, thermisch gehärteten Füllerlackierung und einer während [29] SCA - Harz, angelöst in Solvesso 100 / Butylacetat, erhältlich von der Firma Nuplex Resins, 4600 Bergen op Zoom, Niederlande. [30] Sulfonsäure - haltiger Katalysator, erhältlich von der Fa. Cytec

[31] Butylglykolacetat

[32] Melaminharz, angelöst in Butanol, erhältlich von der Firma Nuplex Resins, 4600 Bergen op Zoom, Niederlande.

[33] Hochmolekulares Benetzungshilfsmittel, erhältlich von der Firma Byk Chemie, Wesel

[34] Aniösung einer Mischung von Lichtscutzadditiven, erhältlich von der Fa. Ciba Spezialitätenchemie, Basel.

[35] Lösungsmittelgemisch, erhältlich von Exxon Mobile Petroleum & Chemical, B 1831 Machelen, Belgium.

[36] Antikocheradditiv, erhältlich von der Firma Byk Chemie, Wesel 10 Minuten bei 80°C vorgetrockneten Schicht aus einem handelsüblichen, konventionellen, schwarzen Basislack der Firma BASF Coatings AG beschichtet sind. Die Basislackschicht und die Klarlackschicht werden gemeinsam während 22 Minuten bei 140°C gehärtet. Die resultierende Basislackierung weist eine Schichtdicke von 7,5 $\mu$m auf, die resultierende Klarlackierung eine Schichtdicke von ca. 35 $\mu$m.

Die resultierenden Klarlackfilme weisen eine sehr gute Kompatibilität - trotz des hohen Festkörperanteils - auf und zeichnen sich durch eine sehr gute Oberflächenoptik aus. Der AMTEC-Restglanz der Beschichtungen beträgt 85 % und die Mikrohärte 97 N/mm2.

**Patentansprüche**

1. Klarlackzusammensetzung umfassend mindestens einen hyperverzweigten, dendritischen hydroxyfunktionellen Polyester mit einer OH-Zahl $\geq$ 180 mg KOH/g gemessen über DIN 53240, **dadurch gekennzeichnet, dass** im Mittel mindestens eine Hydroxyfunktion des Polyesters mit mindestens einer Säure ausgewählt aus der Gruppe der isomeren $C_8$-$C_9$-Monocarbonsäuren verestert ist.

2. Klarlackzusammensetzung nach Anspruch 1, **dadurch gekennzeichnet, dass** der Polyester einen Löslichkeitsparameter SP von $\leq$ 10,3 aufweist.

3. Klarlackzusammensetzung nach einem der vorhergehenden Ansprüche, **dadurch gekennzeichnet, dass** der Polyester eine Hydroxylzahl von > 180 mg KOH/g, bevorzugt 185 - 240 mg KOH/g bestimmt gemäß DIN 53240 und eine Hydroxyfunktionalität (gegeben über die Anzahl der freien und der veresterten Hydroxygruppen des hydroxyfunktionellen Polyesters) von größer als 16 aufweist.

4. Klarlackzusammensetzung nach Anspruch 1, **dadurch gekennzeichnet, dass** die Monocarbonsäure Octansäure oder Isononansäure, bevorzugt Isononansäure ist.

5. Klarlackzusammensetzung nach einem der vorhergehenden Ansprüche, **dadurch gekennzeichnet, dass** der Polyester eine Säurezahl $\leq$ 6, bevorzugt 0 - 5,5 bestimmt gemäß DIN 53402 aufweist.

**6.** Klarlackzusammensetzung nach einem der vorhergehenden Ansprüche, **dadurch gekennzeichnet, dass** der Polyester herstellbar ist über eine partielle Veresterung eines hydroxyfunktionellen Polyesters, der wiederum herstellbar ist über ein Verfahren zur Synthese eines dendritischen polymeren polyfunktioneller Polyalkohols (Polyesterpolyol) mit reaktiven und gegebenenfalls geschützten Hydroxylendgruppen,

- wobei der polymere Polyalkohol n dendritische Zweige besitzt, die von einem monomeren oder polymeren Initiatormolekül mit n reaktiven Gruppen (A) entspringen, wobei jeder Zweig g Verzweigungsgenerationen umfasst, wobei jede Generation mindestens einen polymeren oder monomeren Verzweigungskettenverlängerer mit drei funktionellen Gruppen, von denen mindestens zwei reaktive Hydroxylgruppen (B) sind und eine eine Carboxylgruppe (C) ist, die mit der reaktiven Gruppe (A) und/oder den Hydroxylgruppen (B) reaktiv ist, umfasst, und gegebenenfalls mindestens eine Abstandhaltergeneration, die mindestens einen Abstandhalterkettenverlängerer mit zwei funktionellen Gruppen, von denen eine eine geschützte Hydroxylgruppe (B") und eine eine Gruppe (D) ist, die mit einer Hydroxylgruppe reaktiv ist, umfasst, wobei n und g ganze Zahlen und mindestens 1 sind,
- wobei (i) die zwei Hydroxylgruppen (B) des verwendeten monomeren oder polymeren Kettenverzweigungsverlängerers acetalgeschützte Hydroxylgruppen (B') sind, wobei der Schutz durch Acetal erhalten wird durch eine Reaktion zwischen den zwei Hydroxylgruppen (B) und einer acetalbildenden Carbonylverbindung; und
- (ii) eine erste Verzweigungsgeneration zum Initiatormolekül hinzugefügt wird durch Reaktion zwischen der reaktiven Gruppe (A) und der Carboxylgruppe (C) in einem molaren Verhältnis der reaktiven Gruppen (A) zu den Carboxylgruppen (C) von mindestens 1, wodurch ein polymerer Polyalkohol mit acetalgeschützten Hydroxylgruppen (B') und n dendritischen Zweigen, die eine Generation umfassen, erhalten wird, wobei die acetalgeschützten Hydroxylgruppen (B') gegebenenfalls mittels Acetalspaltung entschützt werden, wodurch ein polymerer Polyalkohol mit reaktiven Hydroxylgruppen (B) erhalten wird; und wobei
- (iii) weitere Verzweigungsgenerationen hinzugefügt werden in g - 1 wiederholten Schritten durch Reaktion zwischen reaktiven Hydroxylgruppen (B), die durch Entschützung mittels Acetalspaltung erhalten werden, und Carboxylgruppen (C) in einem molaren Verhältnis von Hydroxylgruppen (B) zu Carboxylgruppen (C) von mindestens 1, wodurch ein polymer Polyalkohol mit acetalgeschützten Hydroxylgruppen (B') und n dendritischen Zweigen, die zwei oder mehr Generationen umfassen, erhalten wird, wobei die acetalgeschützten Hydroxylgruppen (B') gegebenenfalls mittels Acetalspaltung entschützt werden, wodurch ein polymerer Polyalkohol mit reaktiven Hydroxylgruppen (B) erhalten wird, und
- gegebenenfalls (iv) auf Schritt (ii) und/oder jede Wiederholung von Schritt (iii) einzeln

(a) eine teilweise Schützung, wie beispielsweise Schützung als Acetal, Ketal und/oder Ester von verfügbaren reaktiven Hydroxylgruppen (B), wodurch ein polymerer Polyalkohol mit mindestens einer reaktiven Hydroxylgruppe (B) für die Verwendung in Schritt (iii) oder in einem wiederholten Schritt (ii) erhalten wird, und/oder
(b) der Zusatz des optionalen Abstandshalterkettenverlängerers, was nach Entschützung der geschützten Hydroxylgruppe (B") einen polymeren Polyalkohol mit reaktiven Hydroxylgruppen (B) für die Verwendung in Schritt (iii) oder einem wiederholten Schritt (iii) und n dendritische Zweige ergibt, die eine oder mehrere Verzweigungsgenerationen umfassen, und mindestens eine Abstandshaltergeneration zumindest eine Teilgeneration ist;

folgt.

**7.** Klarlackzusammensetzung nach einem der vorhergehenden Ansprüche, **dadurch gekennzeichnet, dass** sie als Vernetzer mindestens ein Di- oder Polyisocyanat, mindestens ein Aminoplastharz und/oder mindestens ein Tris(alkoxycarbonylamino)triazin umfasst.

**8.** Klarlackzusammensetzung nach Anspruch 7, **dadurch gekennzeichnet, dass** der Vernetzeranteil 30 bis 60, bevorzugt 40 bis 60 Gew.-% bezogen auf den Festkörperanteil der Klarlackzusammensetzung beträgt.

**9.** Klarlackzusammensetzung nach Anspruch 7, **dadurch gekennzeichnet, dass** das Verhältnis von NCO-Gruppen zu freien OH-Gruppen $\leq$ 1,1:1, bevorzugt 1,05:1 bis 0,85:1 ist.

**Claims**

**1.** Clearcoat composition comprising at least one hyperbranched, dendritic, hydroxyl-functional polyester having an OH number $\geq$ 180 mg KOH/g as measured via DIN 53240, **characterized in that** on average at least one hydroxyl function of the polyester is esterified with at least one acid selected from the group consisting of isomeric $C_8$-$C_9$ monocarboxylic acids.

2. Clearcoat composition according to Claim 1, **characterized in that** the polyester has a solubility parameter SP of ≤ 10.3.

3. Clearcoat composition according to either one of the preceding claims, **characterized in that** the polyester has a hydroxyl number of > 180 mg KOH/g, preferably 185 - 240 mg KOH/g as determined in accordance with DIN 53240, and a hydroxyl functionality (given by the number of free and esterified hydroxyl groups of the hydroxyl-functional polyester) of greater than 16.

4. Clearcoat composition according to Claim 1, **characterized in that** the monocarboxylic acid is octanoic or isononanoic acid, preferably isononanoic acid.

5. Clearcoat composition according to any one of the preceding claims, **characterized in that** the polyester has an acid number ≤ 6, preferably 0 - 5.5 as determined in accordance with DIN 53402.

6. Clearcoat composition according to any one of the preceding claims, **characterized in that** the polyester is preparable via a partial esterification of a hyroxyl-functional polyester which in turn is preparable via a process for the synthesis of a dendritic polymeric polyfunctional polyalcohol (polyesterpolyol) having reactive and optionally protected hydroxyl end groups,

- the polymeric polyalcohol possessing n dendritic branches which spring from a monomeric or polymeric initiator molecule having n reactive groups (A), each branch comprising g branching generations, each generation comprising at least one polymeric or monomeric branching chain extender having three functional groups, of which at least two are reactive hydroxyl groups (B) and one is a carboxyl group (C) which is reactive with the reactive group (A) and/or the hydroxyl groups (B), and comprising, if desired, at least one spacer generation which comprises at least one spacer chain extender having two functional groups, of which one is a protected hydroxyl group (B") and one is a group (D) which is reactive with a hydroxyl group, n and g being integers and being at least 1,
- (i) the two hydroxyl groups (B) of the monomeric or polymeric chain branching extender used being acetal-protected hydroxyl groups (B'), the acetal protection being obtained through a reaction between the two hydroxyl groups (B) and an acetal-forming carbonyl compound; and
- (ii) a first branching generation being added to the initiator molecule by reaction between the reactive group (A) and the carboxyl group (C), in a molar ratio of the reactive groups (A) to the carboxyl groups (C) of at least 1, to give a polymeric polyalcohol having acetal-protected hydroxyl groups (B') and n dendritic branches which comprise one generation, the acetal-protected hydroxyl groups (B') being deprotected, if desired, by means of acetal cleavage, to give a polymeric polyalcohol having reactive hydroxyl groups (B); and
- (iii) further branching generations being added in g - 1 repeated steps by reaction between reactive hydroxyl groups (B), which are obtained by deprotection by means of acetal cleavage, and carboxyl groups (C), in a molar ratio of hydroxyl groups (B) to carboxyl groups (C) of at least 1, to give a polymeric polyalcohol having acetal-protected hydroxyl groups (B') and n dendritic branches, which comprise two or more generations, the acetal-protected hydroxyl groups (B') being deprotected, if desired, by means of acetal cleavage, to give a polymeric polyalcohol having reactive hydroxyl groups (B), and
- optionally (iv) step (ii) and/or each repetition of step (iii) individually being followed by

(a) a partial protection, such as, for example, protection as acetal, ketal and/or ester, of available reactive hydroxyl groups (B), to give a polymeric polyalcohol having at least one reactive hydroxyl group (B) for use in step (iii) or in a repeated step (ii), and/or by
(b) the addition of the optional spacer chain extender, which after deprotection of the protected hydroxyl group (B") gives a polymeric polyalcohol having reactive hydroxyl groups (B) for use in step (iii) or a repeated step (iii) and n dendritic branches, which comprise one or more branching generations, and at least one spacer generation is at least one subgeneration.

7. Clearcoat composition according to any one of the preceding claims, **characterized in that** it comprises as crosslinker(s) at least one di- or polyisocyanate, at least one amino resin and/or at least one tris(alkoxycarbonylamino)triazine.

8. Clearcoat composition according to Claim 7, **characterized in that** the crosslinker fraction is 30% to 60%, preferably 40% to 60% by weight, based on the solids fraction of the clearcoat composition.

9. Clearcoat composition according to Claim 7, **characterized in that** the ratio of NCO groups to free OH groups is $\leq$ 1.1:1, preferably 1.05:1 to 0.85:1.

**Revendications**

1. Composition de vernis transparent, comprenant au moins un polyester hydroxyfonctionnel dendritique hyperramifié ayant un indice OH $\geq$ 180 mg KOH/g, mesuré selon DIN 53240, **caractérisée en ce qu'**en moyenne, au moins une fonction hydroxy du polyester est estérifiée avec au moins un acide choisi dans le groupe des acides monocarboxyliques en $C_8$-$C_9$ isomères.

2. Composition de vernis transparent selon la revendication 1, **caractérisée en ce que** le polyester présente un paramètre de solubilité SP $\leq$ 10,3.

3. Composition de vernis transparent selon l'une quelconque des revendications précédentes, **caractérisée en ce que** le polyester présente un indice hydroxyle > 180 mg KOH/g, de préférence de 185 à 240 mg KOH/g, déterminé selon DIN 53240, et une fonctionnalité hydroxy (donnée par le nombre de groupes hydroxy libres et ramifiés du polyester hydroxyfonctionnel) de plus de 16.

4. Composition de vernis transparent selon la revendication 1, **caractérisée en ce que** l'acide monocarboxylique est l'acide octanoïque ou l'acide isononanoïque, de préférence l'acide isononanoïque.

5. Composition de vernis transparent selon l'une quelconque des revendications précédentes, **caractérisée en ce que** le polyester présente un indice d'acidité $\leq$ 6, de préférence de 0 à 5,5, déterminé selon DIN 53402.

6. Composition de vernis transparent selon l'une quelconque des revendications précédentes, **caractérisée en ce que** le polymère peut être fabriqué par une estérification partielle d'un polyester hydroxyfonctionnel, qui peut lui-même être fabriqué par un procédé de synthèse d'un polyol polyfonctionnel polymère dendritique (polyester polyol) contenant des groupes terminaux hydroxyle réactifs et éventuellement protégés,

- le polyol polymère comportant n ramifications dendritiques, qui proviennent d'une molécule initiateur monomère ou polymère contenant n groupes réactifs (A), chaque ramification comprenant g générations de ramification, chaque génération comprenant au moins un allongeur de chaîne de ramification polymère ou monomère contenant trois groupes fonctionnels, dont au moins deux sont des groupes hydroxyle réactifs (B) et un est un groupe carboxyle (C) qui est réactif avec le groupe réactif (A) et/ou les groupes hydroxyle (B), et éventuellement au moins une génération d'espaceur, qui comprend au moins un allongeur de chaîne espaceur contenant deux groupes fonctionnels, dont un est un groupe hydroxyle protégé (B") et un est un groupe (D) qui est réactif avec un groupe hydroxyle, n et g étant des nombres entiers et valant au moins 1,
- (i) les deux groupes hydroxyle (B) de l'allongeur de chaîne de ramification monomère ou polymère utilisé étant des groupes hydroxyle à protection acétal (B'), la protection par un acétal étant obtenue par une réaction entre les deux groupes hydroxyle (B) et un composé de carbonyle formant un acétal ; et
- (ii) une première génération de ramification étant ajoutée à la molécule initiateur par réaction entre le groupe réactif (A) et le groupe carboxyle (C) en un rapport molaire entre les groupes réactifs (A) et les groupes carboxyle (C) d'au moins 1, un polyol polymère contenant des groupes hydroxyle à protection acétal (B') et n ramifications dendritiques, qui comprennent une génération, étant obtenu, les groupes hydroxyle à protection acétal (B') étant éventuellement déprotégés par clivage de l'acétal, un polyol polymère contenant des groupes hydroxyle réactifs (B) étant obtenu ; et
- (iii) des générations de ramification supplémentaires étant ajoutées en g-1 étapes répétées par réaction entre des groupes hydroxyle réactifs (B), qui sont obtenus par déprotection par clivage de l'acétal, et des groupes carboxyle (C) en un rapport molaire entre les groupes hydroxyle (B) et les groupes carboxyle (C) d'au moins 1, un polyol polymère contenant des groupes hydroxyle à protection acétal (B') et n ramifications dendritiques, qui comprennent deux générations ou plus, étant obtenu, les groupes hydroxyle à protection acétal (B') étant éventuellement déprotégés par clivage de l'acétal, un polyol polymère contenant des groupes hydroxyle réactifs (B) étant obtenu, et
- éventuellement (iv), après l'étape (ii) et/ou chaque répétition de l'étape (iii) individuellement,

(a) une protection partielle, telle que par exemple une protection sous la forme d'un acétal, d'un cétal et/ou d'un ester de groupes hydroxyle réactifs (B) disponibles, un polyol polymère contenant au moins un groupe hydroxyle réactif (B) destiné à être utilisé dans l'étape (iii) ou dans une étape (ii) répétée étant obtenu, et/ou

(b) l'ajout de l'allongeur de chaîne espaceur optionnel, qui permet d'obtenir après la déprotection du groupe hydroxyle protégé (B'') un polyol polymère contenant des groupes hydroxyle réactifs (B) destinés à une utilisation dans l'étape (iii) ou une étape (iii) répétée et n ramifications dendritiques, qui comprennent une ou plusieurs générations de ramification, au moins une génération d'espaceur étant au moins une génération partielle.

7.  Composition de vernis transparent selon l'une quelconque des revendications précédentes, **caractérisée en ce qu'**elle comprend en tant qu'agent de réticulation au moins un di- ou polyisocyanate, au moins une résine aminoplaste et/ou au moins une tris(alcoxycarbonylamino)triazine.

8.  Composition de vernis transparent selon la revendication 7, **caractérisée en ce que** la proportion d'agent de réticulation est de 30 à 60, de préférence de 40 à 60 % en poids, par rapport à la teneur en solides de la composition de vernis transparent.

9.  Composition de vernis transparent selon la revendication 7, **caractérisée en ce que** le rapport entre les groupes NCO et les groupes OH libres est ≤ 1,1:1, de préférence de 1,05:1 à 0,85:1.

**IN DER BESCHREIBUNG AUFGEFÜHRTE DOKUMENTE**

**In der Beschreibung aufgeführte Patentdokumente**

- US 6569956 B1
- WO 03093343 A1
- WO 2004020503 A1
- EP 991690 B1
- WO 9317060 A1

**In der Beschreibung aufgeführte Nicht-Patentliteratur**

- **ROOVERS, J.** *Macromolecules,* 1994, vol. 27, 5359-5364
- **ROOVERS, J. et al.** *Macromolecules,* 1993, vol. 26, 4324-4331
- *Journal of Applied Polymer Science,* 1968, vol. 12, 2359-2370